# EUROPEAN PATENT APPLICATION

(11) **EP 1 718 049 A1**
(43) Date of publication of application: **02.11.2006**
(21) Application number: 06003758.7
(22) Date of filing: 24.02.2006
(51) Int. Cl.: H04M 3/42, H04M 3/493

(54) **Interactive voice response system and method for updating presence information**

(30) Priority: 29.04.2005 US 119088
(71) Applicant: Alcatel, 75008 Paris (FR)
(72) Inventor: Vaidya, Mihir, Redmond, WA 98052 (US); Ozugur, Timucin, Fairview, TX 75069 (US)
(74) Representative: Dreiss, Fuhlendorf, Steimle & Becker

(57) **Abstract**

A communications system (100) is capable of dynamically updating presence information in a presence server using an interactive voice response system. The presence server (160) statically collects presence information on a plurality of presentities (110). The interactive voice response system queries and receives dynamic updated presence information from a select one of the presentities and provides the updated presence information to the presence server to update the presence information for the select presentity with the updated presence information.

## Description

### TECHNICAL FIELD OF THE INVENTION

The present invention relates in general to a presence-based interactive communications system, and in particular, to dynamically updating presence information.

### DESCRIPTION OF RELATED ART

Presence-based interactive communication services facilitate more efficient and effective communication sessions by enabling callees (presentities) to publish, in real time, their presence information (such as, the availability, activity, local time, location, current status of the active devices/applications, etc.) and their preference information (e.g., device preferences) to callers (presence watchers). The presence and preference information improves the efficiency of establishing various types of communication sessions, such as voice, text and multi-media (video+) communication sessions.

Presence systems typically incorporate a presence server that manages presence information for a plurality of presentities. Currently, presence servers are programmed to modify presence information according to manual human commands or from specific triggers from presence sources, such as calendar/scheduler applications, telephone applications or instant messaging applications. The presence server collects presence information from the presence sources, and aggregates the presence information to reflect the presence state of the presentities.

For example, whenever a predefined presentity event occurs, such as turning on or off a presentity device, modifying the registration from a device, changing the instant messaging status on a device or entering a scheduled event into the presentity's calendar, the responsible presence source generates presence information to the presence server. By way of example, if a presentity has a meeting scheduled on his or her calendar from 10:00 a.m. to 12:00 p.m., at 10:00 a.m., the calendar/scheduler application notifies the presence server to set the presentity's presence status to "In a Meeting." As another example, when a presentity initiates or answers a phone call, the telephone application notifies the presence server to set the presentity's presence status to "On the Phone."

However, presence servers currently are not capable of tolerating ad-hoc or dynamic changes in the presence information. For example, if a presentity's presence status indicates that the presentity is "In a Meeting" from 10:00 a.m. to 12:00 p.m., but the meeting ends at 11:00 a.m. and the presentity does not have access to his or her computer to revise the presence information, the presence server will continue to provide incorrect presence information to any watchers of the presentity. In addition, the calendar/scheduler application will also continue to provide an incorrect schedule for the presentity to any viewers of the presentity's calendar. Therefore, what is needed is a presence system for dynamically updating presence information.

### SUMMARY OF THE INVENTION

Embodiments of the present invention provide a communications system that is capable of dynamically updating presence information in a presence server using an interactive voice response system. The presence server statically collects presence information on a plurality of presentities. The interactive voice response system queries and receives dynamic updated presence information from a select one of the presentities and provides the updated presence information to the presence server to update the presence information for the select presentity with the updated presence information.

In one embodiment, the interactive voice response system is configured to receive the updated presence information as dual-tone multi-frequency signals. In another embodiment, the interactive voice response system includes a speech recognition application configured to receive the updated presence information. In a further embodiment, the interactive voice response system is configured to receive the updated presence information as data.

### BRIEF DESCRIPTION OF THE DRAWINGS

A more complete understanding of the present invention may be obtained by reference to the following detailed description when taken in conjunction with the accompanying drawings wherein:
FIGURE 1 illustrates an exemplary presence system in accordance with embodiments of the present invention;
FIGURE 2 illustrates an exemplary communications system incorporating an interactive voice response system for dynamically updating presence information of a presence system, in accordance with embodiments of the present invention;
FIGURE 3 is a flowchart illustrating an exemplary process for dynamically updating presence information, in accordance with embodiments of the present invention; and
FIGURE 4 is a signal flow diagram illustrating an exemplary call flow for dynamically updating presence information, in accordance with embodiments of the present invention.

### DETAILED DESCRIPTION OF THE DRAWINGS

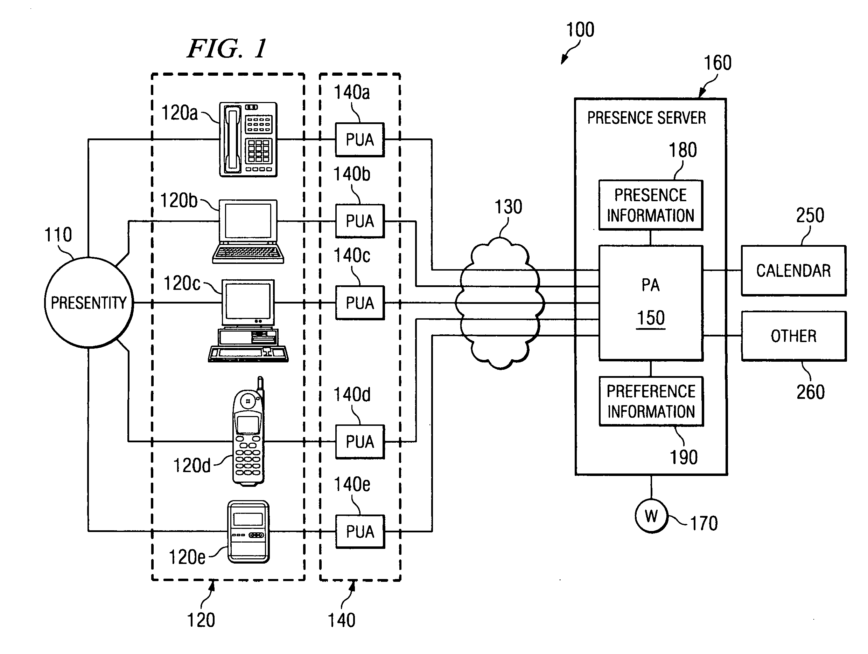

Referring to FIGURE 1, there is illustrated an exemplary presence system 100 capable of implementing various embodiments of the present invention. The presence system 100 includes a presentity 110 and one or more devices 120 associated with the presentity 110. The presentity 110 represents the callee and provides presence information on the callee's presence status to the presence system 100. Each device 120 is a physical communications device capable of sending and/or receiving communications over a communications network 130. Examples of such devices 120 include, but are not limited to, a desktop phone 120a, a laptop computer 120b, a personal computer 120c, a cell phone 120d and a personal digital assistant (PDA) 120e. In FIGURE 1, the communications network 130 represents any type of network over which media (circuit-switched or packet-switched voice or data) may be sent. For example, the communications network 130 can include the Public Switched Telephone Network (PSTN), Public Land Mobile Network (PLMN), one or more private local area networks (LANs), the Internet and/or any other type or combination of networks.

The presence system 100 further includes one or more presence user agents 140 (PUAs), a presence agent (PA) 150, a presence server 160 and one or more watchers 170 of the presentity 110. The PUAs 140 are capable of manipulating and providing presence information for the presentity 110.

In FIGURE 1, a separate PUA 140 is shown for each device 120. However, it should be understood that in other embodiments, the number of PUAs 140 can vary based on the number and type of devices 120, the applications supported by the devices 120 and the system configuration. Each PUA 140 independently generates a component of the overall presence information for a presentity 110. Typically, PUA 140 generates presence information when a change in presence status occurs. Examples of changes in presence status include, but are not limited to, turning on and off a device 120, modifying the registration from a device 120 and changing the instant messaging status on a device 120.

The presence information from each of the PUAs 140 is collected by one or more presence agents (PAs) 150. In FIGURE 1, only one PA 150 is shown for simplicity.

However, it should be understood that in other embodiments, there can be multiple PAs 150 for a presentity 110, each of which is responsible for a subset of the total subscriptions (requests for presence information from watchers 170) currently active for the presentity 110. In addition, the PA 150 collects presence information from a calendar/scheduler application 250 (e.g., Microsoft Exchange Server®, IBM Lotus Notes® or other similar application) and other sources 260 of presence information (e.g., an instant messaging application). The PA 150 aggregates the presence information from each of the sources (e.g., PUA's 140, calendar 250 and other sources 260) and maintains the current complete presence information for the presentity 110. The PA 150 further provides the presence information to one or more watchers 170 (callers or communication session initiators) of the presentity 110.

The presence server 160 is a physical entity that can operate as either the PA 150 or as a proxy server for routing requests from watchers 170 to the PA 150. The presence server 160 stores the presence information 180 and preference information 190 for a plurality of presentities 110. Thus, the PA 150, in combination with the presence server 160, is operable to receive presence information of the presentity 110 from the PUAs 140, receive requests from watchers 170 for the presence information and provide the presence information to the watcher(s) 170. When acting as a PA 150, the presence server 160 can also be co-located with a PUA 140.

The presence system 100 uses a presence protocol to provide presence services to presentities 110 and watchers 170. An example of a presence protocol that can be used in the presence system 100 is the Session Initiation Protocol (SIP), as described in J. Rosenberg, et al., "SIP: Session Initiation Protocol" RFC: 3261, June 2002 and in A. Roach, et al., "Session Initiation Protocol (SIP) - Specific Event Notification," RFC: 3265, June 2002, each of which are hereby incorporated by reference. SIP is an application-layer control protocol used to create, modify and terminate communication (voice, text and/or multimedia) sessions.
SIP can be used with other protocols, such as the Real-time Transport Protocol (RTP), the Real-Time Streaming Protocol (RTSP), the Session Description Protocol (SDP), the International Telecommunication Union - Telecommunications ("ITU-T") H.263 standard (video CODEC), the G.711 and G.729 standards (audio CODECs), and other or additional standards or protocols. As will be appreciated, other or additional protocols and configurations may be used.

SIP networks are capable of routing requests from any user on the network to the server that maintains the registration state for a user. Thus, SIP networks enable a caller (watcher) to transmit a SUBSCRIBE request for presence information relating to a particular callee (presentity 110) to be routed to the presence server 160 that maintains the presence information for the presentity 110. In operation, the presence server 160 and PA 150 may be co-located with the SIP proxy/registrar for efficiency purposes.

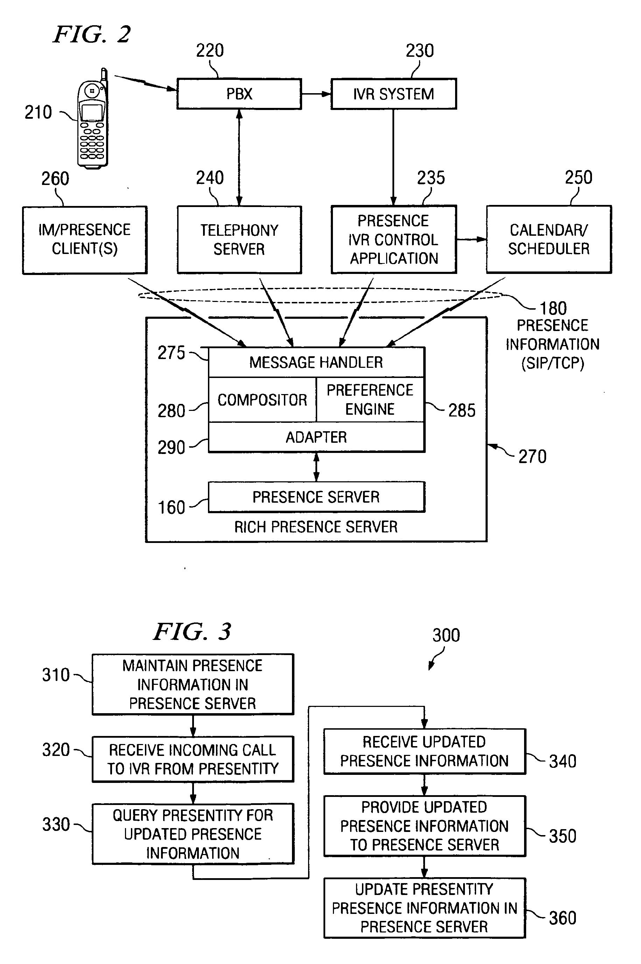

Referring now to FIGURE 2, there is illustrated an exemplary communications system 200 incorporating an interactive voice response (IVR) system 230 for dynamically updating presence and/or preference information of a presentity, in accordance with embodiments of the present invention. In FIGURE 2, a user presentity (caller) dials a predefined number for the IVR system 230 from a user device 210 to establish a call connection with the IVR system 230.

The user device 210 is any type of physical communications device capable of dialing the predefined number for the IVR system 230. Examples of such devices 210 include, but are not limited to, a desktop phone or a cell phone.

In FIGURE 2, the call is routed through a Public Branch Exchange (PBX) 220. However, it should be understood that in other embodiments, the call can be routed through any type of switch to reach the IVR system 230. Thus, the PBX 220 represents any switching device, such as a circuit switch, IP router, gateway or other device that is capable of routing calls. In addition, in one embodiment, the IVR system 230 is included within a voice mail system that receives and stores voice messages for the user presentity. To access the IVR system 230, the presentity selects the IVR system on the user device 210 once a call connection with the voice mail system is established. In another embodiment, the IVR system 230 is included within a rich presence server 270 incorporating the functionality of the presence server 160 of FIGURE 1. In a further embodiment, the IVR system 230 is a stand-alone system capable of accessing the rich presence server 270.

Once a call connection is established between the user device 210 and the IVR system 230, the IVR system 230 queries the user (presentity) for updated presence information. The IVR system 230 can query for default presence/preference settings or can be programmed to query for specific presence/preference settings on a company-wide or individual employee basis. For example, one employee (presentity) may be presented with only presence setting options, while another employee may be presented with both presence and preference setting options. The user (presentity) navigates through the IVR system 230 to select the presence and/or preference settings to be updated. The user (presentity) enters the updated presence and/or preference information into the user device 210, which transmits the updated presence and/or preference information to the IVR system 230.

For example, in one embodiment, the IVR system 230 provides a list of menu options for the presentity to select from, and the user device 210 transmits the updated presence and/or preference information as dual-tone multi-frequency signals. In another embodiment, the user device 210 transmits the updated presence and/or preference information as speech, and the IVR system 230 includes a speech recognition application for receiving and interpreting the speech and converting the speech into updated presence and/or preference information. In a further embodiment, the presentity enters the updated presence and/or preference information as text or other type of data on the user device 210, and the user device 210 transmits the updated presence and/or preference data.

Upon receipt of the updated presence and/or preference information, a presence IVR control application 235 interfaces with the rich presence server 270 to update the presentity's presence and/or preference information. In one embodiment, the presence IVR control application 235 is implemented as part of the IVR system 230. In another embodiment, the presence IVR control application 235 is implemented as a separate application that communicates with the IVR system 230. The presence IVR control application 235 may interface directly with the rich presence server 270 or indirectly through the calendar/scheduler application 250.

The rich presence server 270 includes a message handler 275, a compositor 280, a preference engine 285, an adapter 290 and the preference server 160. The message handler 275 is configured to receive messages (e.g., SIP messages, HTTP messages, etc.) containing presence and/or preference information from various presence sources, as described above. For example, the message handler 275 is configured to receive presence information from a telephony server application 240 (e.g., user device presence user agents that transmit the device status), the calendar/scheduler application 250 (e.g., Microsoft Exchange Server®, IBM Lotus Notes® or other similar application), an instant messaging application 260 (and other sources of presence information) and the presence IVR control application 235. The message handler 275 is also configured to receive preference information from the telephony server application 240, the presence IVR control application 235 and other sources.

The message handler 275 processes the messages to extract the presence information and provides the presence information to the compositor 280, which aggregates the presence information from each of the sources 235, 240, 250 and 260. In addition, the message handler 275 extracts preference information from the received messages and provides the preference information to the preference engine 285, which sets the presentity preferences based on the preference information. The adapter 290 interfaces with the presence server 160 to provide the aggregated presence information from the compositor 280 and the preference settings from the preference engine 285.

FIGURE 3 is a flowchart illustrating an exemplary process 300 for dynamically updating presence information, in accordance with embodiments of the present invention. Initially, at block 310, the presence server collects and maintains static presence and/or preference information for a particular presentity. At block 320, an incoming call from a caller (presentity) is received at an interactive voice response (IVR) system. Once a call connection is established between the presentity and the IVR system, at block 330, the IVR system queries the presentity for updated presence and/or preference information. For example, in one embodiment, the IVR system provides a list of presence options for the presentity to select from (e.g., at lunch, out of office, on vacation, will return at a designated time, etc.). In another embodiment, the IVR system provides an open-ended query that enables the presentity to enter customized updated presence and/or preference information.

At block 340, the IVR system receives updated presence and/or preference information related to one or more presence and/or preference settings from the presentity. For example, the IVR system can receive the updated presence and/or preference information as DTMF signals, speech or data. Upon receipt of the updated presence and/or preference information, at block 350, the IVR system provides the updated presence and/or preference information to the presence server, which updates the presentity's presence and/or preference information with the updated presence and/or preference information at block 360.

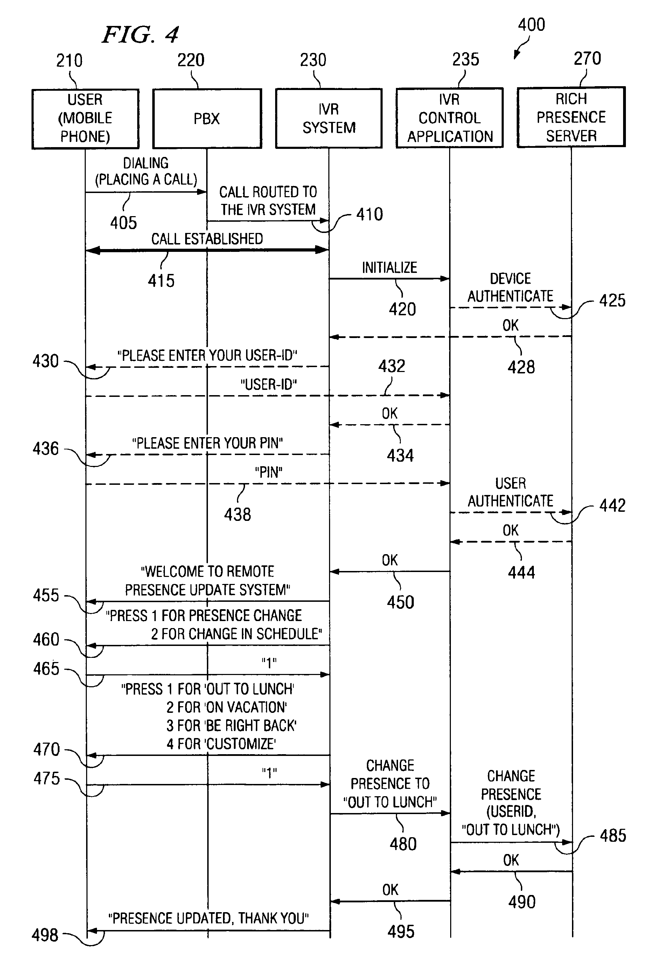

FIGURE 4 is a signal flow diagram illustrating an exemplary call flow for dynamically updating presence information, in accordance with embodiments of the present invention. In FIGURE 4, at 405 and 410, a presentity (caller) dials a predefined number for the IVR system 230 from a user device 210 (e.g., land-line or mobile phone) to establish a call connection with the IVR system 230 through the PBX 220 (or other similar switching device. Once a call connection is established between the user device 210 and the IVR system 230 at 415, the IVR system 230 initializes the presence IVR control application 235 for the call at 420.

Thereafter, the IVR system 230 authenticates the presentity based on a device identity associated with the user device 210 or via a traditional user identity and PIN. For example, at 425, the presence IVR control application 235 transmits the device identity (e.g., phone number or other presentity identification number) received during initialization at 420 to the rich presence server 270 to authenticate the user device 210 at 428. In other embodiments, the device identity and other presentity authentication information (e.g., user identity and PIN) can be registered with the presence IVR control application 235 to avoid extensive signaling between the IVR system 230 and the rich presence server 270.

If the user device 210 is not registered with the rich presence server 270, the IVR system 230 prompts the presentity for the user identity (e.g., a registered device phone number or other presentity identification number) at 430. The presentity enters the user identity on the user device 210, which transmits the user identity to the presence IVR control application 235 via the IVR system 230 at 432. At 434, the presence IVR control application 235 confirms the receipt of the user identity. Thereafter, the IVR system 230 prompts the presentity for the presentity's personal identification number (PIN) or other password at 436. The presentity enters the PIN on the user device 210, which transmits the PIN to the presence IVR control application 235 via the IVR system 230 at 438. From the entered user identity and PIN, the presence IVR control application 235 authenticates the user by either querying the rich presence server 270 at 442 and 444 or storing valid user identities/PINs.

Once the presentity is authenticated at 450, the IVR system 230 provides a welcome message (e.g., "Welcome to remote present update system") to the presentity at 455 and queries the presentity for the desired presence setting option (e.g., "Press 1 for presence change, 2 for change in schedule") at 460. The presentity selects the presence setting option of "presence change" by entering a "1" into the user device 210, which transmits the selection of "presence change" to the IVR system 230 at 465.
Thereafter, a 470 the IVR system 230 queries the presentity for the updated presence information associated with the selected presence setting option (e.g., "Press 1 for 'out to lunch,' 2 for 'on vacation,' 3 for 'be right back' or 4 for 'customize'"). The presentity enters the updated presence information of "out to lunch" by entering "1" into the user device 210, which transmits the selection of "out to lunch" to the IVR system 230 at 475.

Upon receipt of the updated presence information of "out to lunch," the IVR system 230 notifies the presence IVR control application 235 to change the presence state of the presentity to "out to lunch" at 480. At 490, the presence IVR control application interfaces with the rich presence server 270 to change the presence state of the presentity to "out to lunch" at 485. Once the rich presence server 270 has updated the presentity's presence state to "out to lunch," the rich presence server 270 notifies the presence IVR control application 235 at 490, which in turn notifies the IVR system 230 at 495. To complete the update, at 498, the IVR system 230 notifies the presentity that the presence information has been successfully updated (e.g., "Presence updated. Thank-you.").

The following features, separately or in any combination, may also constitute advantageous embodiments of the described or claimed invention:
- The claimed and/or described communications system, wherein said interactive voice response system is configured to receive said updated presence information as dual-tone multi-frequency signals;
- The claimed and/or described communications system, wherein said interactive voice response system includes a speech recognition application configured to receive said updated presence information;
- The claimed and/or described communications system, wherein said interactive voice response system is configured to receive said updated presence information as data;
- The claimed and/or described communications system, wherein said interactive voice response system is configured to authenticate said select presentity to said presence server using identity information provided by said select presentity;
- The claimed and/or described communications system, further comprising: a device used by said select presentity to interface with said interactive voice response system, and wherein said interactive voice response system is further configured to authenticate said select presentity using a device identity of said device;
- The claimed and/or described method, wherein said receiving said updated presence information further comprises the step of: receiving said updated presence information at said interactive voice response system as dual-tone multi-frequency signals;
- The claimed and/or described method, wherein said receiving said updated presence information further comprises the step of: receiving said updated presence information as speech from said select presentity;
- The claimed and/or described method, wherein said receiving said updated presence information further comprises the step of: receiving said updated presence information as data;
- The claimed and/or described method, further comprising the step of: authenticating said select presentity to said presence server using identity information provided by said select presentity;
- The claimed and/or described method, wherein said authenticating further comprises the step of: authenticating said select presentity using a device identity of a device used by said select presentity to interface with said interactive voice response system.

As will be recognized by those skilled in the art, the innovative concepts described in the present application can be modified and varied over a wide rage of applications. Accordingly, the scope of patents subject matter should not be limited to any of the specific exemplary teachings discussed, but is instead defined by the following claims.

## Claims

1. A communications system for dynamically updating presence information, comprising:
an interactive voice response system for querying and
receiving updated presence information from a select presentity; and
a presence server capable of collecting presence information on a plurality of presentities, and
wherein said presence server is connected to receive said updated presence information from said interactive voice response system and update said presence information for said select presentity with said updated presence information.

2. The communications system of Claim 1, wherein said interactive voice response system is accessed using a dialable predefined number.

3. The communications system of Claim 1, wherein said interactive voice response system includes a presence control application for receiving said updated presence information, and wherein said communications system further comprises:
a scheduling application associated with said select presentity configured to receive said updated presence information from said presence control application and
provide said updated presence information to said presence server.

4. The communications system of Claim 1, wherein said interactive voice response system is included within a voice mail system associated with said select presentity.

5. The communications system of Claim 1, wherein said interactive voice response system is further operable to query and receive updated preference information from said select presentity and provide said updated preference information to said presence server.

6. A method for dynamically updating presence information, comprising the steps of:
maintaining presence information on a plurality of presentities in a presence server;
receiving an incoming call to an interactive voice response system from a select one of said plurality of presentities;
querying said select presentity for updated presence information;
receiving said updated presence information from said select presentity;
providing said updated presence information from said interactive voice response system to said presence server; and
updating said presence information in said presence server for said select presentity with said updated presence information.

7. The method of Claim 6, wherein said receiving said incoming call further comprises the step of:
accessing said interactive voice response system using a dialable predefined number.

8. The method of Claim 6, wherein said providing said updated presence information from said interactive voice response system to said presence server further comprises the steps of:
providing said updated presence information to a scheduling application associated with said select presentity; and
providing said updated presence information from said scheduling application to said presence server.

9. The method of Claim 6, wherein said receiving said incoming call further comprises the steps of:
receiving said incoming call to a voice mail system associated with said select presentity; and
accessing said interactive voice response system through said voice mail system associated with said select presentity.

10. The method of Claim 6, further comprising the steps of:
receiving updated preference information from said select presentity by said interactive voice response system; and
providing said updated preference information to said presence server.
